(19) Europäisches Patentamt

European Patent Office

Office européen des brevets

(11) Veröffentlichungsnummer: **0 285 773 B1**

(12) **EUROPÄISCHE PATENTSCHRIFT**

(45) Veröffentlichungstag der Patentschrift: **13.05.92**

(21) Anmeldenummer: **88102160.4**

(22) Anmeldetag: **15.02.88**

(51) Int. Cl.⁵: **G01L 1/02**

54 **Kraftmesseinrichtung.**

(30) Priorität: **09.04.87 DE 3712077**

(43) Veröffentlichungstag der Anmeldung:
**12.10.88 Patentblatt 88/41**

(45) Bekanntmachung des Hinweises auf die
Patenterteilung:
**13.05.92 Patentblatt 92/20**

(84) Benannte Vertragsstaaten:
**CH DE FR GB IT LI SE**

(56) Entgegenhaltungen:
**DE-A- 3 108 147**
**US-A- 4 201 081**

(73) Patentinhaber: **ROBERT BOSCH GMBH**
**Postfach 30 02 20**
**W-7000 Stuttgart 30(DE)**

(72) Erfinder: **Gödert, Heinz, Ing.**
**Cannstatter Strasse 8**
**W-7140 Ludwigsburg(DE)**
Erfinder: **Hänsel, Jürgen**
**Amselweg 10**
**W-7141 Grossbottwar 3(DE)**

EP 0 285 773 B1

## Beschreibung

Stand der Technik

Die Erfindung geht aus von einer Kraftmeßeinrichtung nach der Gattung des unabhängigen Anspruchs. Eine solche Kraftmeßeinrichtung ist beispielsweise aus der US-A-4 201 081 bekannt. Derartige bekannte Meßeinrichtungen lassen sich nach ihrem Wirkprinzip in direkte und indirekte Meßverfahren einteilen. Bei den direkten Kraftmeßverfahren wirkt die Kraft auf einen aktiven Körper, der mit elektrisch auswertbaren Veränderungen seiner Eigenschaften reagiert (z.B. piezoelektrische, magnetoelastische Stoffe). Bei indirekten Kraftmeßverfahren wird die Kraft mittels Verformungskörper auf eine elektrisch auswertbare Wegänderung zurückgeführt (DMS, kapazitiv, induktiv). Diese Einrichtungen sind verhältnismäßig aufwendig.

Vorteile der Erfindung

Die erfindungsgemäße, nach dem indirekten Kraftmeßverfahren arbeitende Kraftmeßeinrichtung mit den Merkmalen des unabhängigen Anspruchs hat demgegenüber den Vorteil, daß sie die Kraftmessung auf eine Druckmessung zurückführt, wodurch man preiswerte Meßwertaufnehmer verwenden kann. Durch Abstimmung des Feder-Masse-Systems und Einstellen der Dämpfung kann das dynamische Verhalten des Meßsystems den jeweiligen Anforderungen angepaßt werden. Durch die Verwendung eines Druckaufnehmers mit integrierter Elektronik entsteht ein sehr kompaktes System mit Signalwandlung und Signalaufbereitung. Das elektrische Ausgangssignal kann unmittelbar als Istwertsignal für einen Kraftregelkreis genutzt werden. Der verschiebliche Teil der Meßeinrichtung besitzt nur einen translatorischen Freiheitsgrad und kann somit neben der reinen Meßfunktion auch Führungsfunktion übernehmen. Nur die mit der Achse der Längsführung zusammenfallende Komponente der Kraft wird ausgewertet.

Weitere vorteilhafte Ausgestaltungen der Erfindung ergeben sich aus den abhängigen Ansprüchen. Dadurch, daß der Kolben durch eine Feder vorgespannt ist, kann der gewünschte Arbeitspunkt durch Verschieben des Federfußpunkts eingestellt werden.

Insbesondere nach den Ansprüchen 6 und 7 kann die Meßeinrichtung sowohl mit einer Überlastsicherung für die Rollmembran als auch für den Druckaufnehmer ausgestaltet werden.

In den Ansprüchen 8 und 9 ist eine besonders vorteilhafte Verwendung der Meßeinrichtung bei Stellgliedern beschrieben. Diese besondere Einbaulage ermöglicht es, daß lediglich die Kraftkomponente in Wirkrichtung des Stellantriebs erfaßt wird. Dadurch ist eine relativ genaue Ermittlung des Wegs des Stellglieds möglich. Die Meßeinrichtung kann an Stelle der bisher verwendeten Ausgleichskupplung in Zylinderführungseinheiten besonders platzsparend eingebaut werden. Ferner ermöglicht der besonders einfache mechanische Aufbau eine direkte Umsetzung der Stellkraft in ein Drucksignal, wobei die Hysterese und die Linearitätsabweichung gering sind.

Zeichnung

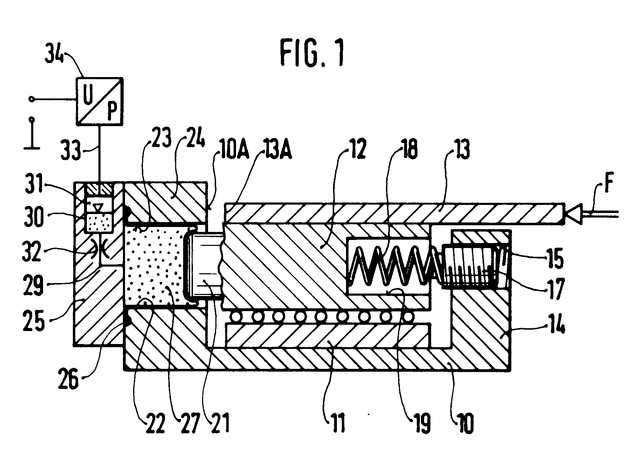

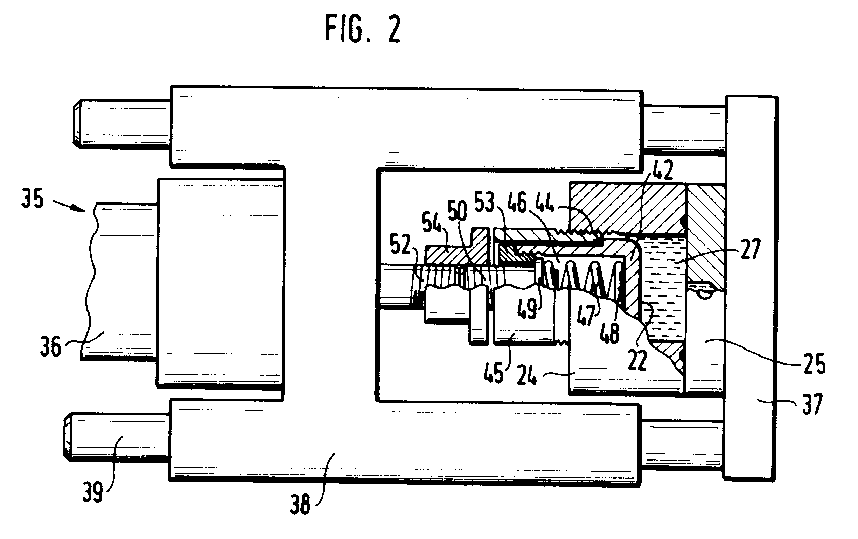

Ausführungsbeispiele der Erfindung sind in der nachfolgenden Beschreibung und in der Zeichnung erläutert. Es zeigen Figur 1 einen Längsschnitt durch eine etwas vereinfacht dargestellte Kraftmeßeinrichtung und Figur 2 eine Abwandlung der Kraftmeßeinrichtung.

Beschreibung der Ausführungsbeispiele

In einem Gehäuseteil 10 ist auf einer Längsführung 11 extrem reibungsarm ein Schieber 12 geführt, an dessen aus dem Gehäuse ragenden Oberfläche ein Stab 13 befestigt ist, auf den die zu messende Kraft F einwirkt. Das der einwirkenden Kraft entgegengerichtete Ende des Stabs ist mit 13A bezeichnet; es hat dann, wenn keine Kraft einwirkt, einen bestimmten Abstand zu einer Gehäusekante 10A. An einer Konsole 14 des Gehäuses ist eine Gewindebohrung 15 ausgebildet, deren Achsrichtung mit der Längsachse des Schiebers 12 etwa zusammenfällt. In der Gewindebohrung 15 ist eine Stellschraube 17 angeordnet, welche auf eine Druckfeder 18 einwirkt, die sich in einer Sacklochbohrung 19 des Schiebers 12 befindet. Am entgegengesetzten Ende des die Sacklochbohrung 19 aufnehmenden Teils des Schiebers 12 ist ein Kolbenteil 21 ausgebildet, das auf eine Rollmembran 22 einwirkt, die in einer achsgleich zur Längsachse des Schiebers 12 verlaufenden Bohrung 23 in einer Gehäusekonsole 24 angeordnet ist. Die Bohrung 23 ist durch eine am Ende des Gehäuses 10 angeordnete Platte 25 verschlossen, welche auch die Rollmembran 22 mit einem an dieser ausgebildeten Ringwulst 26 festhält. Im Innenraum 27 der Rollmembran 22 befindet sich eine Flüssigkeit.

An den Raum 27 schließt sich in der Platte 25 ein Kanal 29 an, welcher in einen geschlossenen Raum 30 mündet, in dem sich ein bestimmtes Flüssigkeits- und Luftvolumen 31 befindet. Im Kanal 29 ist eine Drossel 32 angeordnet. Vom Raum 30 führt ein Kanal 33 zu einem Druckaufnehmer 34, der ein zur Kraft F proportionales elektrisches Ausgangssignal liefert, z.B. ein Piezoelement. Dieses Signal wird als Istwert in einem Kraftregelkreis benötigt, in welchem die Kraftmeßeinrichtung angeordnet werden kann.

Das Meßsystem ist über die weiche Druckfeder 18 vorgespannt. Der gewünschte Arbeitspunkt kann durch Verdrehen der Stellschraube 17 eingestellt werden. Die Ruhelage des Schiebers 18 im Gehäuse ist durch die Vorspannung der Druckfeder 18 und durch die Größe des Flüssigkeits- und Luftvolumens in den Räumen 27 und 30 definiert. Der Abstand zwischen Stirnflächen 10A und 13A bestimmen den maximal möglichen Meßbereich. Der Druck im Raum 27 steigt proportional der zu messenden Kraft F an. Die Kompressibilität des Luftvolumens 31 gewährleistet in Verbindung mit dem Anschlag (Stirnfläche 10A, 13A) einen wirksamen Überlastschutz, und zwar dann, wenn die Stirnkante 13A an die Stirnkante 10A gelangt ist. Durch das Luftvolumen 31 kann ein Verschleifen des Kraftanstiegs bei plötzlich auftretenden Gegenkräften erreicht werden, d. h. das Luftvolumen ergibt im Zusammenwirken mit der Dämpfdrossel 32 eine Verzögerung des Druckanstiegs.

In Figur 2 ist die Meßeinrichtung eingebaut in einen Stellantrieb 35 dargestellt und weist gegenüber dem Ausführungsbespiel nach Figur I eine anders realisierte Überlastsicherung auf. Als Stellantrieb 35 ist z.B. ein Pneumatikzylinder, Hydraulikzylinder oder ein elektromotorischer Antrieb denkbar. Die Meßeinrichtung ist zwischen dem translatorisch bewegten Teil 36 des Stellantriebs 35, z.B. des Kolbens des Zylinders, und dem Führungsteil 37 einer Führungseinheit 38 angeordnet. Die Meßeinrichtung kann z.B. anstelle der im allgemeinen vorhandenen Ausgleichskupplung in die Führungseinheit 38 eingebaut sein. Die Führungseinheit 38 dient bekanntlich zur Verdrehsicherung des Stellantriebs 35 und weist zwei, möglichst reibungsarm gelagerte Führungsstangen 39 auf, die an dem Führungsteil 37 befestigt sind. An dem Führungsteil 37 ist auch die Platte 25 der Meßeinrichtung angeordnet.

Im Unterschied zur Ausbildung nach Figur 1 wirkt in Figur 2 auf die Rollmembran 22 ein topfförmig ausgebildeter Kolben 42 ein, an dessen Mantelfläche sich ein Absatz 44 befindet. Am Absatz 44 liegt eine in die Gehäusekonsole 24 einschraubbare Hülse 45 an. Im Innern 46 des Kolbens 42 ist eine Feder 47 angeordnet, die mit ihrem einen Ende am Boden 48 des Kolbens 42 und mit ihrem anderen Ende an einem Bund 49 eines Bolzens 50 anliegt, der mit Hilfe einer festen, starren Kupplung 54 mit dem Stellglied 36 verbunden ist. Ferner ist in den Kolben 42 eine mit Außengewinde versehene Hülse 53 eingeschraubt, die mit ihrer Stirnseite auf den Bund 49 des Bolzens 50 drückt. Dadurch ergibt sich für die Feder 47 eine definierte Vorspannung, die der maximal zulässigen Meßkraft entspricht. Durch Verdrehen der Hülse 45 wird der Kolben 42 axial verschoben und gegen die Rollmembran angedrückt. Dadurch ist an dem mit Flüssigkeit gefüllten Innenraum 27 ein bestimmter Druck einstellbar und somit die Meßeinrichtung vorspannbar.

Die durch den Stellantrieb 35 erzeugte Kraft wirkt über die Kupplung 54, den Bolzen 50, die vorgespannte Feder 47 und den Kolben 42 auf die Rollmembran 22 ein. Wie bereits oben ausgeführt, wird der im Raum 27 erzeugte Flüssigkeitsdruck auf den Druckaufnehmer 34 übertragen. Der gemessene Flüssigkeitsdruck ist der eingeleiteten Kraft proportional. Die sich im Kraftfluß zwischen dem Stellglied 36 und der Rollmembran 22 befindende Feder 47 dient in Verbindung mit dem Kupplungsstück 54 und der Hülse 45 als Überlastschutz. Steigt die Stellkraft am Stellglied 36 über den maximal zulässigen Wert, sowohl des Wertes an der Membran 22 als auch am Druckaufnehmer 34, so wird die vorgespannte Feder 47 über den im Innern 46 des Kolbens 42 axial verschieblichen Kolbens 50 zusammengedrückt. Die Stirnseite des Kupplungsstücks 54 legt sich dabei an die Hülse 45 an, so daß der Kraftfluß über die Gehäusekonsole 24 und die Platte 25 in das Führungsteil 37 eingeleitet wird. Dadurch wird der Flüssigkeitsdruck im Innenraum 27 begrenzt. Beim Rückhub der Stelleinheit 35 wird über den Absatz 44 am Kolben 42 und den Bund 49 des Kolbens 50 eine Mitnahme des Führungsteils 37 erreicht.

## Patentansprüche

1. Kraftmeßeinrichtung, bei der die zu messende Kraft (F) durch einen Kolben (21) auf ein Flüssigkeitsvolumen (27) einwirkt, an das ein Druckaufnehmer (34) angeschlossen ist, in dem der Flüssigkeitsdruck in ein elektrisches Signal umgewandelt wird, dadurch gekennzeichnet, daß das Flüssigkeitsvolumen in einer in einer Gehäuseausnehmung (23) angeordneten Rollmembran (22) eingeschlossen ist, und daß sich zwischen dem Druckaufnehmer (24) und dem Flüssgkeitsvolumen (27) ein Luftvolumen (31) befindet.

2. Einrichtung nach Anspruch 1, dadurch gekennzeichnet, daß der Kolben (21) Teil eines reibungsarm gelagerten Schiebers (12) ist, der durch eine Feder (18) vorgespannt ist.

3. Einrichtung nach Anspruch 1 oder 2, dadurch gekennzeichnet, daß sich zwischen dem Flüssigkeitsvolumen (27) und dem Luftvolumen (31) eine Drossel (32) befindet.

4. Einrichtung nach einem der Ansprüche 1 bis 3, dadurch gekennzeichnet, daß diese Teil eines Kraftregelkreises ist, in dem das elektrische Ausgangssignal des Druckaufnehmers den Istwert bildet.

5. Einrichtung nach einem der Ansprüche 1 bis 4, dadurch gekennzeichnet, daß der Druckaufnehmer eine integrierte Elektronik für Signalumwandlung aufweist.

6. Einrichtung nach einem der Ansprüche 2 bis 5, dadurch gekennzeichnet, daß die Feder (47) mit einem Krafteinleitungsteil (13, 36, 52) verbunden ist.

7. Einrichtung nach Anspruch 6, dadurch gekennzeichnet, daß der Kolben (42) in einer Ausgangsstellung an einem am Gehäuse (24) angeordneten Teil (45) anliegt, das die Bewegung eines Teils (54) des Krafteinleitungsteils (13, 36) in Kraftrichtung bei Erreichen der maximal zulässigen Kraft begrenzt.

8. Stellglied eines Stellantriebs mit einer Meßeinrichtung nach einem der Ansprüche 1 bis 7, dadurch gekennzeichnet, daß die Meßeinrichtung zwischen einem translatorisch bewegten Teil (36) des Stellantriebs (35) und einem Führungsteil (37) einer Führungseinheit (38) des Stellantriebs (35) angeordnet ist.

9. Stellglied nach Anspruch 7 und 8, dadurch gekennzeichnet, daß am Krafteinleitungsteil (13, 36) ein Mitnehmer (49, 52) für den Kolben (42) und für das Führungsteil (37) angeordnet ist.

10. Stellglied nach Anspruch 8 und/oder 9, dadurch gekennzeichnet, daß das Stellglied (36) ein Druckzylinder ist.

## Claims

1. Force measuring device in which the force (F) to be measured acts through a piston (21) onto a fluid volume (27) to which a pressure sensor (34) is connected in which the fluid pressure is converted into an electrical signal, characterised in that the fluid volume is enclosed in a roller diaphragm (22) arranged in a housing recess (23), and in that an air volume (31) is located between the pressure sensor (24) and the fluid volume (27).

2. Device according to Claim 1, characterised in that the piston (21) is part of a slider (12) supported with low friction, which is pretensioned by a spring (18).

3. Device according to Claim 1 or 2, characterised in that a throttle (32) is located between the fluid volume (27) and the air volume (31).

4. Device according to one of Claims 1 to 3, characterised in that it is part of a force control loop in which the electrical output signal of the pressure sensor forms the actual value.

5. Device according to one of Claims 1 to 4, characterised in that the pressure sensor exhibits integrated electronics for signal conversion.

6. Device according to one of Claims 2 to 5, characterised in that the spring (47) is connected to a force introduction part (13, 36, 52).

7. Device according to Claim 6, characterised in that the piston (42) rests in an initial position against a part (45) arranged at the housing (24), which part limits the movement of a part (54) of the force introduction part (13, 36) in the direction of the force when the maximum permissible force has been reached.

8. Actuating member of an actuating drive, comprising a measuring device according to one of Claims 1 to 7, characterised in that the measuring device is arranged between a translatorially moved part (36) of the actuating drive (35) and a guidance part (37) of a guidance unit (38) of the actuating drive (35).

9. Actuating member according to Claims 7 and 8, characterised in that a carrier (49, 52) for the piston (42) and for the guidance part (37) is arranged at the force introduction part (13, 36).

10. Actuating member according to Claim 8 and/or 9, characterised in that the actuating member (36) is a pressure cylinder.

## Revendications

1. Transducteur dans lequel la force (F) à mesurer agit par un piston (21) sur un volume de fluide (27) relié à un capteur de pression (34) transformant la pression du fluide en un signal électrique, caractérisé en ce que le volume de fluide est emprisonné dans une membrane à roulement (22) placée dans cavité de boîtier (23) et entre le capteur de pression (24) et le volume de fluide (27), il est prévu un volume d'air (31).

2. Transducteur selon la revendication 1, caractérisé en ce que le piston (21) fait partie d'un tiroir (12) monté avec un faible frottement et précontraint par un ressort (18).

3. Transducteur selon la revendication 1 ou 2, caractérisé en ce qu'entre le volume de liquide (27) et le volume d'air (31), il y a un organe d'étranglement (32).

4. Transducteur selon l'une des revendications 1 à 3, caractérisé en ce qu'elle fait partie d'un circuit de régulation de force dans lequel le signal de sortie électrique du capteur de pression est la valeur réelle.

5. Transducteur selon l'une des revendications 1 à 4, caractérisé en ce que le capteur de pression comporte une électronique intégrée pour la transformation du signal.

6. Transducteur selon l'une des revendications 2 à 5, caractérisé en ce que le ressort (47) est relié à une pièce d'induction de force (13, 36,52).

7. Transducteur selon la revendication 6, caractérisé en ce qu'en position de sortie, le piston (42) est appliqué contre une pièce (45) prévue dans le boîtier (24) qui limite le mouvement d'une pièce (54) de la pièce d'induction de force (13, 36) dans la direction de la force lorsqu'on atteint la force maximale autorisée.

8. Organe de réglage d'un moyen d'entraînement de réglage comportant un transducteur selon l'une des revendications 1 à 7, caractérisé en ce que le transducteur est prévu entre une pièce (36) mobile en translation appartenant au moyen d'entraînement de réglage (35) et une pièce de guidage (37) d'une unité de guidage (38) du moyen d'entraînement de réglage (35).

9. Organe de réglage selon les revendications 7 et 8, caractérisé en ce que sur la partie d'induction de force (13, 36) il est prévu un organe d'entraînement (49, 52) pour le piston (42) et pour la pièce de guidage (37).

10. Organe de réglage selon la revendication 8 et/ou 9, caractérisé en ce que l'organe de réglage (36) est un vérin de poussée.

# FIG. 1

FIG. 2